# EUROPÄISCHE PATENTSCHRIFT

(11) **EP 3 030 451 B1**
(45) Veröffentlichungstag und Bekanntmachung des Hinweises auf die Patenterteilung: **19.09.2018**
(21) Anmeldenummer: 14742549.0
(22) Anmeldetag: 25.07.2014
(51) Int. Cl.: B60L 7/10, B60L 15/20, B60L 3/10, B60L 7/26

(54) **VERFAHREN ZUM ABBREMSEN EINES FAHRZEUGS SOWIE FAHRZEUG**
METHOD FOR BRAKING A VEHICLE, AND VEHICLE
PROCÉDÉ DE FREINAGE D'UN VÉHICULE ET VÉHICULE

(30) Priorität: 08.08.2013 DE 102013215670
(43) Veröffentlichungstag der Anmeldung: 15.06.2016
(73) Patentinhaber: Volkswagen Aktiengesellschaft, 38440 Wolfsburg (DE)
(72) Erfinder: RIEDEL, Stephan, 38448 Wolfsburg (DE); ALM, Stephan, 38112 Braunschweig (DE)
(86) Internationale Anmeldenummer: PCT/EP2014/066064
(87) Internationale Veröffentlichungsnummer: WO 2015/018669

(56) Entgegenhaltungen:
- DE-A1-102010 003 076
- DE-A1-102010 054 620
- DE-A1-102010 062 387
- DE-A1-102012 217 679
- DE-A1-102012 217 679
- JP-A- 2007 282 406

## Beschreibung

Die Erfindung betrifft ein Verfahren zum Abbremsen eines Fahrzeugs, insbesondere eines Kraftwagens, gemäß dem Oberbegriffdes unabhängigen Anspruchs.

Derartige Verfahren und Fahrzeuge sind aus dem allgemeinen Stand der Technik, insbesondere aus der Massenfertigung von Personenkraftwagen, hinlänglich bekannt. Das Fahrzeug umfasst wenigstens ein Rad, über das das Fahrzeug auf einer Fahrbahn abrollen und sich dadurch entlang der Fahrbahn bewegen kann. Ist das Fahrzeug beispielsweise als zumindest zweispuriger Kraftwagen ausgebildet, so umfasst das Fahrzeug wenigstens zwei in Fahrzeuglängsrichtungen voneinander beabstandet angeordnete Achsen. Diese Achsen umfassen jeweils wenigstens zwei Räder, über die das Fahrzeug auf der Fahrbahn abrollen kann. Zumindest eines der Räder ist ein angetriebenes Rad, über das das Fahrzeug angetrieben werden kann. Üblicherweise sind die zwei Räder zumindest einer der Achsen angetriebene Räder.

Handelt es sich beispielsweise bei den Rädern der Vorderachse um die angetriebenen Räder, so ist das Fahrzeug als frontgetriebenes Fahrzeug beziehungsweise als Fahrzeug mit Vorderradantrieb ausgebildet, wenn die Räder der Hinterachse nicht angetrieben sind. Bei der Hinterachse handelt es sich dann um eine sogenannte Schleppachse, während es sich bei der Vorderachse um eine angetriebene Achse handelt. Umgekehrt dazu ist das Fahrzeug als heckgetriebenes Fahrzeug beziehungsweise als Fahrzeug mit Heckantrieb ausgebildet, wenn die Räder der Hinterachse die angetriebenen Räder sind, während die Räder der Vorderachse nicht angetrieben sind. Sind die Räder beider Achsen angetrieben, so weist das Fahrzeug einen Allrad- beziehungsweise Vierradantrieb auf.

Das Fahrzeug umfasst ferner eine Bremseinrichtung, mittels welcher das sich entlang der Fahrbahn bewegende Fahrzeug abgebremst werden kann. Hierzu wird wenigstens eines der Räder des Fahrzeugs mittels der Bremseinrichtung abgebremst. Zum Abbremsen des wenigstens einen Rades wird von der Bremseinrichtung wenigstens ein Bremsmoment auf das Rad aufgebracht.

Bei Fahrzeugen beziehungsweise Kraftwagen mit konventionellem Antrieb umfasst die Bremseinrichtung hierzu wenigstens eine dem Rad zugeordnete Reibbremse, mittels welcher das Rad abgebremst werden kann. Eine solche Reibbremse umfasst beispielsweise eine mit dem Rad drehfest gekoppelte Bremsscheibe sowie eine mit einem Radträger befestigte und somit aufbaufeste Bremszange, mittels welcher die sich mit dem Rad mitdrehende Bremsscheibe abgebremst werden kann. Üblicherweise ist die Reibbremse hydraulisch betätigt, so dass also die Reibbremse als hydraulische Bremse ausgebildet ist.

Bei Fahrzeugen beziehungsweise Kraftwagen mit alternativen Antrieben, beispielsweise bei Hybrid-Fahrzeugen, umfasst die Bremseinrichtung zudem wenigstens eine sogenannte rekuperative Bremse. Mittels einer solchen rekuperativen Bremse kann Energie beim Abbremsen des Rads und somit des Fahrzeugs rückgewonnen werden, indem beispielsweise beim Abbremsen des Fahrzeugs kinetische Energie über die rekuperative Bremse in elektrische Energie, das heißt elektrischen Strom umgewandelt wird. Hierzu umfasst die rekuperative Bremse beispielsweise wenigstens einen Generator, welcher zum Abbremsen des Rades vom Rad angetrieben wird und dadurch mechanische Energie in elektrische Energie umwandelt. Die so gewonnene beziehungsweise rückgewonnene elektrische Energie kann in wenigstens einer elektrischen Speichereinrichtung, insbesondere in einer Batterie, des Hybrid-Fahrzeugs gespeichert werden.

Das insgesamt auf das Rad von der Bremseinrichtung aufzubringende Bremsmoment wird beispielsweise vom Fahrer des Fahrzeugs derart vorgegeben, dass der Fahrer ein Bremspedal betätigt, insbesondere drückt. Das dadurch angeforderte Bremsmoment kann dann beispielsweise teilweise von der Reibbremse und teilweise von der rekuperativen Bremse auf das Rad aufgebracht werden.

Darüber hinaus sind aus dem allgemeinen Stand der Technik Anti-Blockiersysteme bekannt, welche üblicherweise auch als automatische Blockierverhinderer bezeichnet werden. Derartige Anti-Blockiersysteme dienen zum Durchführen von Bremsungen unter zumindest nahezu maximaler Ausnutzung des Kraftschlusses zwischen Reifen und Fahrbahn, sogenannten Anti-Blockier-Bremsungen. Bei einer solchen Anti-Blockier-Bremsung wird mittels einer Regelungseinrichtung des Anti-Blockiersystems das von der Bremseinrichtung auf das wenigstens eine Rad aufzubringende Bremsmoment zumindest zeitweise auf einen vorgebbaren Wert begrenzt, um dadurch ein Blockieren des Rads relativ zur Fahrbahn zumindest zeitweise zu verhindern.

Diese Begrenzung des Bremsmoments erfolgt beispielsweise in Abhängigkeit von wenigstens einem Regelwert, welcher den Schlupf des Rads relativ zur Fahrbahn charakterisiert. Die Idee, die einem solchen Anti-Blockiersystem zugrunde liegt, ist, dass maximale Bremsverzögerungen in Abhängigkeit von Fahrbahnzustand und Reifen des Rads bei bestimmten Schlupfwerten erreicht werden können. Durch Begrenzen des Bremsmoments wird das Bremsmoment derart eingestellt, dass der Schlupf zumindest während eines überwiegenden Teils der Anti-Blockier-Bremsung möglichst nahe bei dem für eine möglichst hohe Bremsverzögerung optimalen Schlupfwert liegt, so dass einerseits eine sehr starke Verzögerung beziehungsweise Abbremsung des Fahrzeugs realisiert und andererseits jedoch ein Blockieren des Rads verhindert werden kann. Dadurch bleibt das Fahrzeug beispielsweise lenkbar und stabil, da das nichtblockierende Rad noch Seitenführungskräfte aufnehmen kann.
Die DE 10 2010 054 620 A1 offenbart ein Verfahren zur Bestimmung von Bremsmomenten eines Fahrzeugs mit Traktionsbatterie, mit mindestens einer rekuperativen Bremse und mindestens einer Reibbremse an mindestens einer Antriebsachse unter Einbeziehung eines querdynamischen Fahrzustands des Fahrzeugs. Bei einer solchen Traktionsbatterie handelt es sich um die genannte elektrische Speichereinrichtung, in welcher mittels der rekuperativen Bremse rückgewonnene, elektrische Energie gespeichert werden kann.
Die gespeicherte elektrische Energie lässt sich beispielsweise für elektrische Verbraucher und/oder zum Antreiben des Fahrzeugs über einen Elektromotor nutzen, so dass ein besonders energieeffizienter, und im Falle eines Hybrid-Fahrzeugs insbesondere ein kraftstoffverbrauchsarmer Betrieb, realisierbar ist. Als Elektromotor kann beispielsweise eine elektrische Maschine verwendet werden, welche in einem Motorbetrieb als Elektromotor und in einem Generatorbetrieb als der genannte Generator genutzt werden kann.
Es hat sich jedoch gezeigt, dass der Betrieb eines solchen herkömmlichen Fahrzeugs hinsichtlich der Effizienz und der Realisierung eines besonders geringen Energieverbrauchs verbesserungswürdig ist.
Die gattungsgemäße DE 10 2012 217 679 A1 zeigt darüber hinaus ein Verfahren zum Abbremsen eines Fahrzeugs mit einer Reibbremse und einer rekuperativen Bremse. Mit der Bremsvorrichtung des Fahrzeugs kann eine Anti-Blockier-Bremsung durchgeführt werden, bei der das Blockieren der Räder verhindert wird. Während der Anti-Blockier-Bremsung wird ein Bremsmoment zumindest teilweise durch die rekuperative Bremse aufgebracht.

Die DE 10 2010 062 387 A1 (Continental Teves AG) offenbart auch ein Verfahren zum Abbremsen mit einer Reibbremse und einer rekuperativen Bremse. Wenn bei einem Bremsvorgang die Antiblockierregelung an 3 oder 4 Rädern eingreift, so wird der hydraulische Bremsassistent aktiviert und gleichzeitig das rekuperative Bremsmoment stufenlos bis auf Null vermindert. Es ist Aufgabe der vorliegenden Erfindung, ein Verfahren für ein Fahrzeugder eingangs genannten Art derart weiterzuentwickeln, dass sich ein besonders stabiler, effizienter und energieverbrauchsgünstiger Betrieb des Fahrzeugs realisieren lässt.

Diese Aufgabe wird durch ein Verfahren mit den Merkmalen des unabhängigen Anspruchs gelöst. Vorteilhafte Ausgestaltungen sind in den übrigen Ansprüchen angegeben.

Ein erster Aspekt der Erfindung betrifft ein Verfahren zum Abbremsen eines sich entlang einer Fahrbahn bewegenden Fahrzeugs, insbesondere Kraftwagens, mittels einer Bremseinrichtung des Fahrzeugs. Die Bremseinrichtung umfasst wenigstens eine Reibbremse und wenigstens eine rekuperative Bremse zum Abbremsen wenigstens eines Rads des Fahrzeugs. Bei dem Verfahren wird mittels der Bremseinrichtung eine Anti-Blockier-Bremsung durchgeführt. Im Rahmen dieser Anti-Blockier-Bremsung wird mittels einer Regelungseinrichtung des Fahrzeugs wenigstens ein von der Bremseinrichtung auf das Rad aufzubringendes bzw. aufgebrachtes Bremsmoment zumindest zeitweise auf einen vorgebbaren Wert begrenzt, um dadurch ein Blockieren des Rads relativ zur Fahrbahn zumindest zeitweise zu verhindern. Durch die Regelungseinrichtung des Fahrzeugs und die Bremseinrichtung ist somit ein sogenanntes Anti-Blockiersystem beziehungsweise ein sogenannter automatischer Blockierverhinderer gebildet.

Zur Realisierung eines besonders effizienten und energieverbrauchseffizienten Betriebs des Fahrzeugs ist es erfindungsgemäß vorgesehen, dass das Bremsmoment zum Abbremsen des Rads zumindest während einer Teilzeitdauer der gesamten Zeitdauer der Anti-Blockier-Bremsung wenigstens teilweise von der rekuperativen Bremse auf das Rad aufgebracht wird. Der Erfindung liegt die Idee zugrunde, die rekuperative Bremse während der Anti-Blockier-Bremsung nicht abzuschalten und somit bei der Anti-Blockier-Bremsung das Bremsmoment nicht ausschließlich mittels der Reibbremse aufzubringen, sondern bei der Anti-Blockier-Bremsung, das heißt während eines mittels der Regelungseinrichtung bewirkten Anti-Blockierbetriebs der Bremseinrichtung die rekuperative Bremse zu nutzen und das Bremsmoment zum Abbremsen des Rades zumindest teilweise von der rekuperativen Bremse auf das Rad aufzubringen.

Somit kann während der Anti-Blockier-Bremsung Energie insbesondere in Form von elektrischer Energie mittels der rekuperativen Bremse gewonnen beziehungsweise rückgewonnen werden. Diese rückgewonnene elektrische Energie kann zum Betreiben wenigstens eines elektrischen Verbrauchers des Fahrzeugs und/oder zum Antreiben des Fahrzeugs über wenigstens einen Elektromotor verwendet werden. Würde während der Anti-Blockier-Bremsung die rekuperative Bremse nicht genutzt werden, das heißt abgeschaltet sein, so ließe sich keine Energie rückgewinnen und die Energie zum Antreiben des Fahrzeugs und/oder zum Betreiben des wenigstens einen elektrischen Verbrauchers müsste anderweitig bereitgestellt werden. Dies würde zu einem erhöhten Energieverbrauch führen und somit den effizienten Betrieb des Kraftwagens beeinträchtigen. Das erfindungsgemäße Verfahren ermöglicht es somit, bei Anti-Blockier-Bremsungen Energie, die herkömmlicherweise als Wärmeenergie verlorengehen würde, zurückzugewinnen.

In besonders vorteilhafter Ausgestaltung der Erfindung wird mittels der Regelungseinrichtung eine Variierung eines zumindest während der Teilzeitdauer der Anti-Blockier-Bremsung von der Reibbremse auf das Rad aufgebrachter erster Bremsmomentanteil bewirkt, während ein von der rekuperativen Bremse auf das Rad aufgebrachter zweiter Bremsmomentanteil konstant gehalten wird. Es kann vorgesehen sein, dass bei der Anti-Blockier-Bremsung die Reibbremse zumindest zeitweise abgeschaltet ist, so dass das Bremsmoment bezogen auf die Reibbremse und die rekuperative Bremse ausschließlich von der rekuperativen Bremse aufgebracht wird. Reicht jedoch die rekuperative Bremse nicht aus, um das Rad hinreichend abzubremsen, so wird während der Anti-Blockier-Bremsung beziehungsweise zumindest während der Teilzeitdauer der Anti-Blockier-Bremsung sowohl von der Reibbremse als auch von der rekuperativen Bremse ein jeweiliger Bremsmomentanteil auf das Rad aufgebracht.

Vorzugsweise erfolgt dabei die radselektive Regelung des Reibbremsschlupfes, das heißt die Begrenzung des Bremsmoments insgesamt über die Reibbremse, während der zweite, von der rekuperativen Bremse aufgebrachte Bremsmomentanteil so groß wie möglich gehalten wird. Hierdurch kann während der Anti-Blockier-Bremsung ein besonders hoher Betrag an Energie mittels der rekuperativen Bremse rekuperiert werden, so dass sich ein besonders effizienter Betrieb des Fahrzeugs realisieren lässt.

Die rückgewonnene elektrische Energie kann beispielsweise in einer elektrischen Speichereinrichtung, insbesondere in einer Batterie, des Fahrzeugs gespeichert, beziehungsweise zwischengespeichert werden. Ferner ist es möglich, die rekuperierte Energie einem Verbraucher direkt, das heißt ohne Zwischenspeicherung in einer Speichereinrichtung, zuzuführen.

Durch die Nutzung der rekuperativen Bremse während der Anti-Blockier-Bremsung kann eine besonders hohe Rekuperationsleistung ermöglicht werden, insbesondere auf Fahrbahnen mit geringem Reibwert der Fahrbahnoberfläche. Das Verfahren wirkt sich besonders vorteilhaft im Winter aus, indem es aufgrund von Schnee und Eis auf der Fahrbahnoberfläche häufig zu Anti-Blockier-Bremsungen, das heißt zum Anspringen des Anti-Blockiersystems kommen kann.

Um ein sicheres Abbremsen des Rads und somit des Fahrzeugs sowie gleichzeitig eine hinreichende Seitenstabilität zu gewährleisten, ist es bei einer weiteren Ausführungsform der Erfindung vorgesehen, dass mittels der Regelungseinrichtung während der Anti-Blockier-Bremsung ein von der Reibbremse auf das Rad aufgebrachter erster Bremsmomentanteil auf wenigstens einen vorgebbaren Schwellenwert begrenzt wird.

In weiterer vorteilhafter Ausgestaltung der Erfindung wird mittels der Regelungseinrichtung während der Anti-Blockier-Bremsung ein von der rekuperativen Bremse auf das Rad aufgebrachter zweiter Bremsmomentanteil auf wenigstens einen zweiten vorgebbaren Schwellenwert begrenzt. Kommt es beispielsweise bei der Anti-Blockier-Bremsung zur Rekuperation ohne Anteil der Reibbremse, so kann die Stabilität des Fahrzeugs, insbesondere einer das Rad umfassenden Achse, weil es sich um eine angetriebene Achse handeln kann, über den zweiten Schwellenwert geregelt werden.

Kommt es während der Anti-Blockier-Bremsung sowohl zum Einsatz der Reibbremse als auch zum Einsatz der rekuperativen Bremse, so werden beispielsweise jeweilige Regler zum Regeln der Reibbremse beziehungsweise zum Regeln der rekuperativen Bremse miteinander verknüpft, so dass beispielsweise ein parallel arbeitender Regelalgorithmus geschaffen wird. Regelschwellen, das heißt erste Schwellenwerte des Reglers zum Regeln der Reibbremse können situationsabhängig sehr unterschiedlich sein.

Zur Realisierung eines besonders effizienten und gleichzeitig besonders fahrstabilen Betriebs des Kraftwagens ist es bei einer weiteren Ausführungsform der Erfindung vorgesehen, dass der erste Schwellenwert größer als der zweite Schwellenwert ist. Dieser Ausführungsform liegt die Idee zugrunde, die beiden Schwellenwerte, das heißt die beiden Regelschwellen des Reglers zum Regeln der rekuperativen Bremse und des Reglers zum Regeln der Reibbremse miteinander zu verknüpfen.

Durch den so geschaffenen Unterschied zwischen den Schwellenwerten beziehungsweise Regelschwellen ist es möglich, den Bremsmomentenanteil der rekuperativen Bremse während der Anti-Blockier-Bremsung schnell abzubauen bis zu einer bezogen auf die rekuperative Bremse und die Reibbremse ausschließlich durch die Reibbremse bewirkten Bremsung.

Zur Realisierung einer besonders hohen Fahrstabilität bei der Anti-Blockier-Bremsung, während sowohl von der Reibbremse als auch von der rekuperativen Bremse ein jeweiliger Bremsmomentanteil auf das Rad aufgebracht wird, ist es vorgesehen, die Verknüpfung der beiden Regelschwellen beziehungsweise Schwellenwerte so auszuführen, dass bei der Anti-Blockier-Bremsung der zweite Schwellenwert in Abhängigkeit vom ersten Schwellenwert vorgegeben wird. Mit anderen Worten ist es vorzugsweise vorgesehen, dass die Regelschwelle der rekuperativen Bremse mit einem applizierbaren Offset, das heißt mit einem vorgebbaren Abstand, an die Regelschwelle der Reibbremse gekoppelt ist.

Dies stellt sicher, dass das Rad für eine besonders gute Bremsleistung geregelt werden kann. Weist das Fahrzeug beispielsweise mehrere, abzubremsende Räder auf, so kann dadurch ermöglicht werden, dass die einzelnen Räder für jeweilige, besonders gute Bremsleistungen individuell geregelt werden können. Gleichzeitig kann ein möglichst großer Teil des Bremsmoments von der rekuperativen Bremse aufgebracht werden, so dass ein besonders hoher Betrag an Energie rekuperiert werden kann.

Das zumindest teilweise durch die rekuperative Bremse bewirkte Aufbringen des Bremsmoments wird während einer ersten Teilzeitdauer der gesamten Zeitdauer der Anti-Blockier-Bremsung durchgeführt, und während eines sich zeitlich an die erste Teilzeitdauer anschließenden zweiten Teilzeitdauer der gesamten Zeitdauer der Anti-Blockier-Bremsung unterbleibt das zumindest teilweise durch die rekuperative Bremse bewirkte Aufbringen des Bremsmoments, wobei während der zweiten Teilzeitdauer das Bremsmoment von der Reibbremse auf das Rad aufgebracht wird. Mit anderen Worten wird das Abbremsen des Rads während der ersten Teilzeitdauer bezogen auf die Reibbremse und die rekuperative Bremse ausschließlich durch die rekuperative Bremse oder teilweise durch die rekuperative Bremse und teilweise durch die Reibbremse bewirkt, wobei das Abbremsen des Rades während der zweiten Teilzeitdauer bezogen auf die Reibbremse und die rekuperative Bremse ausschließlich durch die Reibbremse bewirkt wird. Hierdurch können besonders kurze Bremswege sowie eine hohe Fahrstabilität realisiert werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es zeigen:
- Fig. 1: eine schematische Darstellung eines Fahrzeugs mit wenigstens einer Achse in Form einer Antriebsachse, welche zwei angetriebene Räder umfasst, wobei im Rahmen eines Verfahrens zum Abbremsen des Fahrzeugs während einer Anti-Blockier-Bremsung elektrische Energie mittels wenigstens einer rekuperativen Bremse rückgewonnen wird;
- Fig. 2: ein Ablaufdiagramm zur Veranschaulichung des Verfahrens; und
- Fig. 3: ein Diagramm mit zeitlichen Verläufen zum Veranschaulichen des Verfahrens.

In den Figuren sind gleiche oder funktionsgleiche Elemente mit den gleichen Bezugszeichen versehen.

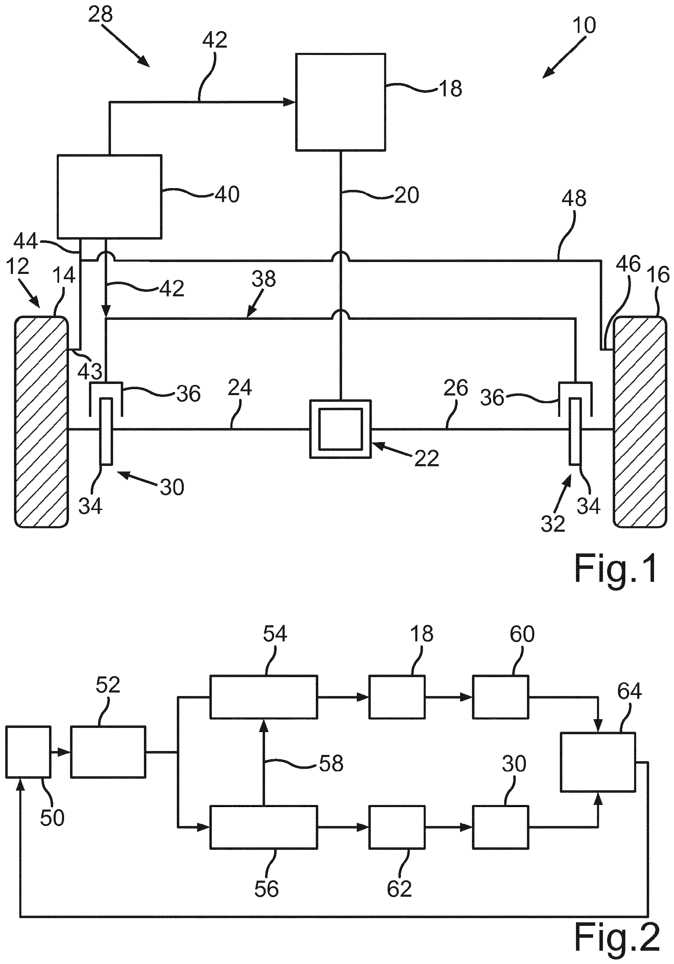

Fig. 1 zeigt ausschnittsweise in einer schematischen Darstellung ein im Ganzen mit 10 bezeichnetes Fahrzeug, welches als Hybrid-Fahrzeug oder als Elektrofahrzeug ausgebildet sein kann. Das Fahrzeug 10 umfasst eine Achse 12 mit zwei Rädern 14, 16. Bei den Rädern 14, 16 handelt es sich um angetriebene Räder, so dass es sich bei der Achse 12 um eine angetriebene Achse handelt. Die Achse 12 wird daher auch als Antriebsachse bezeichnet. Die Achse 12 kann dabei eine Vorderachse oder eine Hinterachse des Fahrzeugs 10 sein.

Das Fahrzeug 10 umfasst eine elektrische Maschine 18, welche in einem Generatorbetrieb und in einem Motorbetrieb betreibbar ist. In dem Motorbetrieb fungiert die elektrische Maschine 18 als Elektromotor. Die elektrische Maschine 18 umfasst einen Rotor, welcher mit einer Abtriebswelle 20 des Fahrzeugs 10 drehfest gekoppelt ist. Im Motorbetrieb ist die Abtriebswelle 20 mittels der elektrischen Maschine 18 antreibbar. Das Fahrzeug 10 umfasst auch ein Differential 22 der Achse 12. Im Motorbetrieb ist das Differential 22 über die Abtriebswelle 20 von der elektrischen Maschine 18 antreibbar.

Das Differential 22 wird üblicherweise auch als Differentialgetriebe, Ausgleichsgetriebe oder Achsgetriebe bezeichnet, da es beispielsweise bei einer Kurvenfahrt des Fahrzeugs 10 unterschiedliche Drehzahlen der Räder 14, 16 zulässt, während die Räder 14, 16 angetrieben werden. Die Räder 14, 16 sind über jeweilige Antriebswellen 24, 26 mit dem Differential 22 gekoppelt und somit im Motorbetrieb der elektrischen Maschine 18 von dieser über das Differential 22 und die Abtriebswelle 20 antreibbar.

Im Generatorbetrieb wird die elektrische Maschine 18 von den Rädern 14, 16 über die Antriebswellen 24, 26, das Differential 22 und die Abtriebswelle 20 angetrieben. Dadurch kann kinetische Energie des sich entlang einer Fahrbahn bewegenden Fahrzeugs 10 unter Abbremsen des Fahrzeugs 10 mittels der elektrischen Maschine 18 in elektrische Energie umgewandelt werden. Hierdurch ist eine Rückgewinnung von Energie möglich, was auch als Rekuperation bezeichnet wird. Das Fahrzeug 10 kann über die Räder 14, 16 auf der Fahrbahn anrollen.

Das Fahrzeug 10 umfasst auch eine im Ganzen mit 28 bezeichnete Bremseinrichtung. Die Bremseinrichtung 28 umfasst eine dem Rad 14 zugeordnete Reibbremse 30 sowie eine dem Rad 16 zugeordnete Reibbremse 32. Mittels der Reibbremse 30 kann das Rad 14 abgebremst werden, wobei mittels der Reibbremse 32 das Rad 16 abgebremst werden kann. Da das Differential 22 unterschiedliche Drehzahlen der Räder 14, 16 zulässt, kann mittels der Reibbremsen 30, 32 eine radindividuelle beziehungsweise radselektive Abbremsung erfolgen. Dies bedeutet, dass die Räder 14, 16 mittels der Reibbremsen 30, 32 unterschiedlich stark abgebremst werden können.

Die jeweilige Reibbremse 30,32 umfasst eine mit dem jeweiligen Rad 14, 16 drehfest gekoppelte Bremsscheibe 34 sowie eine Bremszange 36. Die Bremszange 36 ist zumindest mittelbar an einem Aufbau, insbesondere einer Karosserie, des Fahrzeugs 10 befestigt, wobei sich das jeweilige Rad 14, 16 relativ zum Aufbau und somit relativ zur Bremszange 36 drehen kann.

Wie aus Fig. 1 erkennbar ist, ist die jeweilige Bremsscheibe 34 zumindest teilweise in der Bremszange 36 aufgenommen. Zum Abbremsen des jeweiligen Rads 14, 16 wird wenigstens ein Bremskolben, welcher an der Bremszange 36 relativ zu dieser bewegbar gelagert ist, im Kontakt mit der korrespondierenden Bremsscheibe 34 bewegt. Dadurch kommt es zu einem Reibkontakt zwischen der Bremsscheibe 34 und dem Bremskolben, wodurch die jeweilige Bremsscheibe 34 und somit das jeweilige, korrespondierende Rad 14, 16 abgebremst wird.

Die Bewegung des Kolbens in Kontakt mit der Bremsscheibe 34 wird beispielsweise hydraulisch, das heißt mittels einer Hydraulikflüssigkeit bewirkt. Hierzu wird der jeweiligen Bremszange 36 und den jeweiligen Kolben die Hydraulikflüssigkeit über entsprechende Leitungen 38 zugeführt. Die Reibbremsen 30, 32 sind somit Bestandteil einer hydraulischen Bremsanlage. Mit anderen Worten ist die jeweilige Reibbremse 30, 32 als hydraulische Reibbremse ausgebildet.

Die Bremseinrichtung 28 umfasst auch die elektrische Maschine 18, welche in ihrem Generatorbetrieb als sogenannte rekuperative Bremse wirkt. Durch das Betreiben der elektrischen Maschine 18 in ihrem Generatorbetrieb werden die Räder 14, 16 nämlich abgebremst. Somit ist es möglich, das jeweilige Rad 14, 16 bezogen auf die jeweilige Reibbremse 30, 32 und die rekuperative Bremse ausschließlich mittels der rekuperativen Bremse, ausschließlich mittels der Reibbremse 30, 32 oder gleichzeitig mittels der rekuperativen Bremse und mittels der jeweiligen Reibbremse 30, 32 abzubremsen. Wird die rekuperative Bremse (elektrische Maschine 18) zum Abbremsen genutzt, so wird Energie rekuperiert.

Das Fahrzeug 10 kann auch eine in Fig. 1 nicht dargestellte elektrische Speichereinrichtung, beispielsweise in Form einer Batterie, umfassen, in der die mittels der elektrischen Maschine 18 in deren Generatorbetrieb rekuperierte, elektrische Energie gespeichert werden kann. Die rekuperierte und beispielsweise gespeicherte, elektrische Energie kann beispielsweise zum Betreiben wenigstens eines elektrischen Verbrauchers des Fahrzeugs 10 genutzt werden. Alternativ oder zusätzlich kann die elektrische Maschine 18 in ihrem Motorbetrieb mit der elektrischen Energie versorgt werden, so dass dadurch das Fahrzeug 10 mittels der elektrischen Maschine 18 und somit rein elektrisch, das heißt emissionslos angetrieben werden kann. Durch Rekuperation von Energie lässt sich eine besonders hohe Reichweite realisieren, über die das Fahrzeug 10 elektrisch angetrieben werden kann, ohne beispielsweise die Batterie zwischendurch mit einem Stromnetz verbinden und dadurch aufladen zu müssen.

Wie aus Fig. 1 erkennbar ist, umfasst die Bremseinrichtung 28 auch eine Regelungseinrichtung 40 zum Regeln der rekuperativen Bremse in Form der elektrischen Maschine 18 und der jeweiligen Reibbremse 30, 32. Diese Regelbarkeit ist dabei in Fig. 1 durch Richtungspfeile 42 veranschaulicht, die von der Regelungseinrichtung 40 weg und zur elektrischen Maschine 18 beziehungsweise zu den Reibbremsen 30, 32 hinführen. Die Regelungseinrichtung 40 ist eine Komponente des Fahrzeugs 10 und somit vom Fahrer des Fahrzeugs 10 unterschiedlich.

Dem Rad 14 ist ein Drehzahlsensor 43 zugeordnet, mittels welchem die Drehzahl des Rads 14 erfassbar ist. Der Drehzahlsensor 43 stellt ein die Drehzahl des Rades 14 charakterisierendes, erstes Drehzahlsignal bereit, welches beispielsweise über eine Leitung 44 vom Drehzahlsensor 43 an die Regelungseinrichtung 40 übermittelt und von der Regelungseinrichtung 40 empfangen wird.

Dementsprechend ist dem Rad 16 ein Drehzahlsensor 46 zugeordnet, mittels welchem die Drehzahl des Rades 16 erfasst wird. Der Drehzahlsensor 46 stellt ein die Drehzahl des Rades 16 charakterisierendes, zweites Drehzahlsignal bereit, welches beispielsweise über eine Leitung 48 vom Drehzahlsensor 46 an die Regelungseinrichtung 40 übertragen und von der Regelungseinrichtung 40 empfangen wird. Dadurch ist es möglich, die Bremseinrichtung 28 beziehungsweise die rekuperative Bremse und die Reibbremsen 30, 32 in Abhängigkeit von den Drehzahlsignalen zu betreiben beziehungsweise zu regeln.

Im Folgenden wird ein Verfahren zum Abbremsen des Fahrzeugs 10 beschrieben, wobei dieses Verfahren der Übersicht wegen am Beispiel des Rades 14 und der dem Rad 14 zugeordneten Reibbremse 30 erläutert wird. Das zuvor und im Folgenden zum Rad 14 und zur Reibbremse 30 Geschilderte kann jedoch auch ohne weiteres auf das Rad 16 und die dem Rad 16 zugeordnete Reibbremse 32 übertragen werden.

Um das Rad 14 abzubremsen, wird von der Bremseinrichtung 28 ein Bremsmoment auf das Rad 14 aufgebracht. Dieses Bremsmoment wird auch als Gesamtbremsmoment bezeichnet. Je nach Höhe beziehungsweise Wert des aufzubringenden Bremsmoments kann dieses bezogen auf die rekuperative Bremse und die Reibbremse 30 ausschließlich durch die Reibbremse 30, ausschließlich durch die rekuperative Bremse oder teilweise durch die rekuperative Bremse und teilweise durch die Reibbremse 30 aufgebracht werden.

Das Gesamtbremsmoment wird beispielsweise durch den Fahrer des Fahrzeugs 10 derart vorgegeben, dass der Fahrer ein Bedienelement, insbesondere ein Bremspedal, betätigt, insbesondere drückt.

Im Rahmen des Verfahrens ist nun die Durchführung einer Anti-Blockier-Bremsung vorgesehen. Im Rahmen einer solchen Anti-Blockier-Bremsung
wird mittels der Regelungseinrichtung 40 das von der Bremseinrichtung 28 auf das Rad 14 aufzubringende Bremsmoment (Gesamtbremsmoment) zumindest zeitweise auf einen vorgebbaren Wert begrenzt, um dadurch ein Blockieren des Rads 14 relativ zur Fahrbahn zu vermeiden. Dieser vorgebbare Wert ist dabei geringer als ein Vorgabewert, welcher vom Fahrer durch Betätigen des Bremspedals eigentlich vorgegeben wird. Mit anderen Worten, würde die Anti-Blockier-Bremsung nicht mittels der Regelungseinrichtung 40 durchgeführt werden, so wäre das vom Fahrer durch Betätigen des Bremspedals vorgegebene und mittels der Bremseinrichtung 28 aufgebrachte Gesamtbremsmoment höher als der vorgegebene Wert, was zum Blockieren des Rades 14 führen würde. Die Regelungseinrichtung 40 ermöglicht es somit, ein Gesamtbremsmoment zu bewirken bzw. einzustellen, welches gegenüber dem vom Fahrer durch Betätigen des Bremspedals angeforderten Bremsmoment geringer ist, und zwar ohne dass der Fahrer etwas zu Verringerung bzw. Begrenzung des Bremsmoments zutun, etwa die aktuell vorliegende Betätigung des Bremspedals verändern (verringern) müsste.

Die Anti-Blockier-Bremsung wird dabei in Abhängigkeit von dem jeweiligen Drehzahlsignal durchgeführt, um ein mögliches Blockieren des Rads 14 zu erfassen und diesem möglichen Blockieren entgegenzuwirken.

Durch die Bremseinrichtung 28 und die Regelungseinrichtung 40 ist somit ein sogenanntes Anti-Blockiersystem geschaffen, so dass einerseits der Schlupf des Rades 14 bei der Anti-Blockier-Bremsung möglichst nahe bei einem zur Realisierung einer besonders hohen Verzögerung optimalen Wert bleibt und andererseits ein Blockieren des Rades 14 vermieden wird. Dadurch kann die Fahrstabilität des Fahrzeugs 10 gewährleistet werden. Der Schlupf beziehungsweise der zur Realisierung einer besonders hohen Bremsleistung vorteilhafte Schlupfwert ist dabei abhängig vom Fahrbahnzustand beziehungsweise vom Reibwert der Fahrbahnoberfläche.

Zur Realisierung eines besonders effizienten und energieverbrauchsgünstigen Betriebs des Fahrzeugs 10 ist es nun bei dem Verfahren vorgesehen, dass das Bremsmoment zum Abbremsen des Rades 14 zumindest während einer Teilzeitdauer der gesamten Zeitdauer der Anti-Blockier-Bremsung wenigstens teilweise von der rekupertativen Bremse (elektrische Maschine 18) auf das Rad 14 aufgebracht wird. Hierdurch wird bei der Anti-Blockier-Bremsung Energie rekuperiert, welche bei Abschaltung der rekuperativen Bremse während der Anti-Blockier-Bremsung als Wärmeenergie ungenutzt verloren ginge.

Dabei kann vorgesehen sein, dass das Bremsmoment zumindest während der Teilzeitdauer der Anti-Blockier-Bremsung und bezogen auf die rekuperative Bremse und die Reibbremse 30 ausschließlich von der rekuperativen Bremse aufgebracht wird. Reicht beispielsweise ein von der rekuperativen Bremse maximal aufbringbares Bremsmoment nicht aus, um das vorgegebene Gesamtbremsmoment auf das Rad 14 aufzubringen, so wird zusätzlich auch die Reibbremse 30 genutzt, um das Gesamtbremsmoment von der Bremseinrichtung 28 aufzubringen. In diesem Fall umfasst das Gesamtbremsmoment einen ersten Bremsmomentanteil, welcher von der Reibbremse 30 aufgebracht wird, sowie einen zweiten Bremsmomentanteil, welcher von der rekuperativen Bremse auf das Rad 14 aufgebracht wird.

Vorzugsweise ist es dabei vorgesehen, dass der zweite Bremsmomentanteil so groß wie möglich gehalten wird und gleichzeitig eine radselektive Regelung des Gesamtbremsmoments beziehungsweise des Reibbremsschlupfes über die hydraulische Bremsanlage ausgeführt wird. Hierbei ist es beispielsweise vorgesehen, dass - während der zweite Bremsmomentanteil zumindest im Wesentlichen konstant gehalten wird - der erste Bremsmomentanteil mittels der Regelungseinrichtung 40 variiert wird. Dies bedeutet, dass beispielsweise der erste Bremsmomentanteil ausgehend von einem ersten Wert auf einen zweiten Wert reduziert und anschließend auf einen dritten Wert wieder erhöht wird, wobei der dritte Wert größer als der zweite Wert und gleich dem oder geringer als der erste Wert sein kann.

Diese Variierung des ersten Bremsmomentanteils erfolgt beispielsweise mittels wenigstens eines Ventils, mittels welchem ein Druck der Hydraulikflüssigkeit auf einen vorgebbaren Wert begrenzt wird.

In Fig. 2 ist das Verfahren anhand eines Ablaufdiagramms veranschaulicht. Mittels der Drehzahlsensoren 43, 46 werden die jeweiligen Drehzahlen der Räder 14, 16 erfasst, woraus jeweilige Radgeschwindigkeiten 50 der Räder 14, 16 ermittelt werden. In Abhängigkeit von den Radgeschwindigkeiten 50 erfolgt eine Berechnung 52 der Fahrzeuggeschwindigkeit und der jeweiligen Radschlüpfe.

Zum Regeln der elektrischen Maschine 18 wird ein erster Regler 54 verwendet, wobei zum Regeln der Reibbremse 30 ein zweiter Regler 56 verwendet wird. Die dem Verfahren zugrundeliegende Idee ist nun, jeweilige Schwellenwerte, sogenannte Regelschwellen der Regler 54, 56 miteinander zu kombinieren. Mittels der Regelungseinrichtung 40 wird die Reibbremse 30 anhand des Reglers 56 geregelt, wobei mittels der Regelungseinrichtung 40 die Rekuperationsbremse anhand des Reglers 54 geregelt wird. Während der Anti-Blockier-Bremsung wird dabei der von der Reibbremse 30 auf das Rad 14 aufgebrachte erste Bremsmomentanteil auf wenigstens einen ersten vorgebbaren Schwellenwert (Regelschwelle) begrenzt, so dass der Regler 56 auch als ABS-Regler der hydraulischen Bremsanlage bezeichnet werden kann.

Mittels der Regelungseinrichtung 40 wird anhand des Reglers 54 während der Anti-Blockier-Bremsung der von der rekuperativen Bremse auf das Rad 14 aufgebrachte zweite Bremsmomentanteil auf wenigstens einen zweiten vorgebbaren Schwellenwert (Regelschwelle) begrenzt, so dass der Regler 54 auch als Rekuperationsbegrenzungsregler bezeichnet wird. Dabei ist der zweite Schwellenwert, das heißt die Regelschwelle des ABS-Reglers größer als der erste Schwellenwert, das heißt die Regelschwelle des Rekuperationsbegrenzungsreglers.

Wie in Fig. 2 durch einen Richtungspfeil 58 veranschaulicht ist, wird der zweite Schwellenwert in Abhängigkeit von dem ersten Schwellenwert vorgegeben. Dies bedeutet, dass eine Regelwertvorgabe vom Regler 56 an den Regler 54 in Form eines Soll-Schlupfes erfolgt. Vorzugsweise ist dabei vorgesehen, dass der zweite vorgebbare Schwellenwert mit einem vorgebbaren Abstand zum ersten Schwellenwert eingestellt wird. Je nach Fahrsituation können unterschiedliche Regelschwellen (erste Schwellenwerte) des ABS-Reglers vorgegeben werden, so dass beispielsweise bei unterschiedlichen, aufeinanderfolgenden und zeitlich voneinander beabstandeten Anti-Blockier-Bremsungen unterschiedliche zweite Schwellenwerte vorgegeben werden können. Die Einstellung der jeweiligen Regelschwellen erfolgt dabei in Abhängigkeit von der Berechnung 52, die den Reglern 54, 56 zugeführt werden.

Wie aus Fig. 2 erkennbar ist, wird die elektrische Maschine 18 in ihrem Generatorbetrieb während der Anti-Blockier-Bremsung mittels des Reglers 54 geregelt, so dass dadurch der zweite, von der rekuperativen Bremse aufzubringende Bremsmomentanteil 60 eingestellt wird.

Aus der Regelung der Reibbremse 30 mittels des Reglers 56 resultiert ein Bremsdruck 62 der Hydraulikflüssigkeit, woraus wiederum der von der Reibbremse 30 aufzubringende, erster Bremsmomentanteil resultiert. Der erste Bremsmomentanteil und der zweite Bremsmomentanteil ergeben in der Summe das Gesamtbremsmoment zum Abbremsen des Rades 14, wobei das Gesamtbremsmoment in Fig. 2 mit 64 bezeichnet ist. Das zumindest zeitweise Abbremsen des Rades 14 führt zu einer zumindest zeitweisen Reduzierung der Radgeschwindigkeiten 50, was mittels der Drehzahlsensoren 43, 46 wieder erfasst werden kann. Im Anschluss daran läuft der geschilderte Verlauf nochmal ab. Dieses Vorgehen wiederholt sich beispielsweise so lange, bis das Fahrzeug 10 zum Stehen kommt oder bis vom Fahrer nur noch ein solch geringes Bremsmoment angefordert wird, welches nicht zur Blockierung des Rades 14 führen würde.

Durch die genannte Einstellung der Regelschwelle des Rekuperationsbegrenzungsreglers in Abhängigkeit zur Regelschwelle des ABS-Reglers entsteht zwischen den Regelschwellen ein Unterschied, der zu einem schnellen Abbau des von der Rekuperationsbremse aufzubringenden zweiten Bremsmomentanteils bis zu einer rein hydraulischen Bremsung führt. Da die Regelschwelle des Rekuperationsbegrenzungsreglers nicht größer als die Regelschwelle des ABS-Reglers ist, kann eine besonders hohe Fahrstabilität gewährleistet werden. Die Verknüpfung der beiden Regelschwellen ist somit derart ausgeführt, dass die einzelnen Räder 14, 16 für eine besonders gute Bremsleistung individuell hydraulisch geregelt werden können und gleichzeitig ein möglichst großer Teil des Gesamtbremsmoments von der rekuperativen Bremse aufgebracht werden kann. Hierdurch kann ein besonders hoher Betrag an Energie während der Anti-Blockier-Bremsung rekuperiert werden.

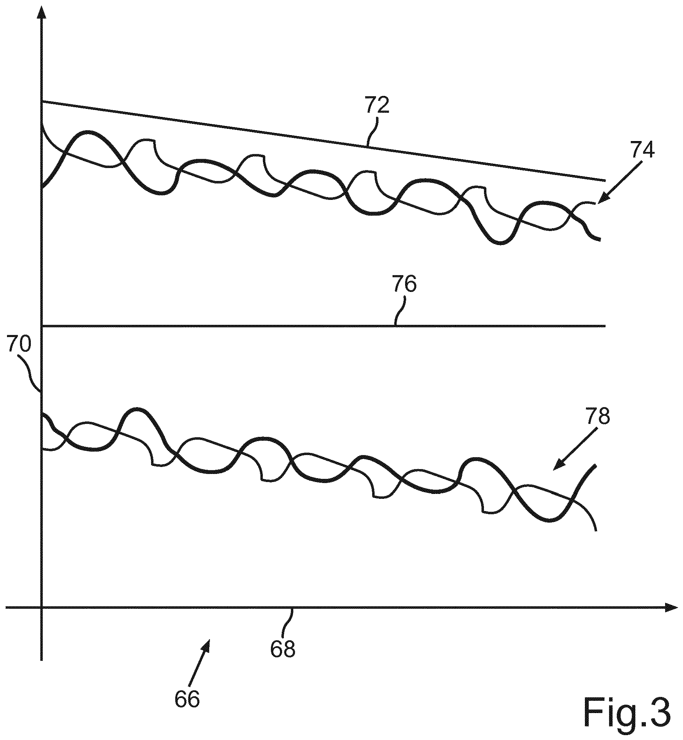

Fig. 3 zeigt ein Diagramm 66 zur Veranschaulichung eines Zusammenhangs zwischen Bremsmomenten und der Regelung der Bremseinrichtung 28. Auf der Abszisse 68 des Diagramms 66 ist die Zeit aufgetragen, wobei auf der Ordinate 70 das Bremsmoment aufgetragen ist. Ein erster zeitlicher Verlauf 72 charakterisiert die Fahrzeugreferenzgeschwindigkeit, während die zeitlichen Verläufe 74 die Radgeschwindigkeiten charakterisieren. Ein zeitlicher Verlauf 76 charakterisiert das Bremsmoment achsweise, wobei die zeitlichen Verläufe 78 radindividuell die von der jeweiligen Reibbremse 30, 32 aufgebrachten Bremsmomentanteile beziehungsweise Bremsmomente veranschaulicht.

## Patentansprüche

1. Verfahren zum Abbremsen eines sich entlang einer Fahrbahn bewegenden Fahrzeugs (10) mittels einer Bremseinrichtung (28), welche wenigstens eine Reibbremse (30) und wenigstens eine rekuperative Bremse (18) zum Abbremsen wenigstens eines Rads (14) des Fahrzeugs (10) umfasst, wobei mittels der Bremseinrichtung (28) eine Anti-Blockier-Bremsung durchgeführt wird, bei welcher mittels einer Regelungseinrichtung (40) des Fahrzeugs (10) wenigstens ein von der Bremseinrichtung (28) auf das Rad aufzubringendes Bremsmoment (64) zumindest zeitweise auf einen vorgebbaren Wert begrenzt wird, um dadurch ein Blockieren des Rads (14) relativ zur Fahrbahn zumindest zeitweise zu verhindern,
wobei
das Bremsmoment (64) zum Abbremsen des Rads (14) zumindest während einer Teilzeitdauer der gesamten Zeitdauer der Anti-Blockier-Bremsung wenigstens teilweise von der rekuperativen Bremse (18) auf das Rad (14) aufgebracht wird,
**dadurch gekennzeichnet, dass** das zumindest teilweise durch die rekuperative Bremse (18) bewirkte Aufbringen des Bremsmoments (64) während einer ersten Teilzeitdauer der gesamten Zeitdauer der Anti-Blockier-Bremsung durchgeführt wird und während einer sich zeitlich an die erste Teilzeitdauer anschließenden zweiten Teilzeitdauer der gesamten Zeitdauer der der Anti-Blockier-Bremsung unterbleibt, wobei während der zweiten Teilzeitdauer das Bremsmoment von der Reibbremse (30) auf das Rad (14) aufgebracht wird.

2. Verfahren nach Anspruch 1,
**dadurch gekennzeichnet, dass**
mittels der Regelungseinrichtung (40) eine Variierung eines zumindest während der Teilzeitdauer der Anti-Blockier-Bremsung von der Reibbremse (30) auf das Rad (14) aufgebrachter erster Bremsmomentanteil bewirkt wird, während ein von der rekuperativen Bremse (18) auf das Rad (14) aufgebrachter zweiter Bremsmomentanteil (60) konstant gehalten wird.

3. Verfahren nach einem der Ansprüche 1 oder 2,
**dadurch gekennzeichnet, dass**
mittels der Regelungseinrichtung (40) während der Anti-Blockier-Bremsung ein von der Reibbremse (30) auf das Rad (14) aufgebrachter erster Bremsmomentanteil auf wenigstens einen ersten vorgebbaren Schwellenwert begrenzt wird.

4. Verfahren nach einem der vorhergehenden Ansprüche,
**dadurch gekennzeichnet, dass**
mittels der Regelungseinrichtung (40) während der Anti-Blockier-Bremsung ein von der rekuperativen Bremse (18) auf das Rad (14) aufgebrachter zweiter Bremsmomentanteil (60) auf wenigstens einen zweiten vorgebbaren Schwellenwert begrenzt wird.

5. Verfahren nach den Ansprüchen 3 und 4,
**dadurch gekennzeichnet, dass**
der erste Schwellenwert größer als der zweite Schwellenwert ist.

6. Verfahren nach den Ansprüchen 3 und 4 oder nach Anspruch 5,
**dadurch gekennzeichnet, dass**
bei der Anti-Blockier-Bremsung der zweite Schwellenwert in Abhängigkeit von dem ersten Schwellenwert vorgegeben wird.

## Claims

1. Method for braking a vehicle (10) which is moving along a roadway, by means of a brake device (28) which comprises at least one friction brake (30) and at least one recuperative brake (18) for braking at least one wheel (14) of the vehicle (10), wherein an anti-lock braking operation is carried out by means of the brake device (28), during which anti-lock braking operation at least one braking torque (64) which is to be applied to the wheel by the brake device (28) is limited at least temporarily to a predefinable value by means of a regulating device (40) of the vehicle (10), in order thereby to prevent, at least temporarily, the wheel (14) from locking relative to the roadway,
wherein
the braking torque (64) for braking the wheel (14) is applied to the wheel (14) at least partially by the recuperative brake (18) at least during part of the entire duration of the anti-lock braking operation, **characterized in that** the application of the braking torque (64) which is brought about at least partially by the recuperative brake (18) is carried out during a first part of the entire duration of the anti-lock braking operation and does not occur during a second part of the entire duration of the anti-lock braking operation which is chronologically subsequent to the first part of the duration, wherein during the second part of the duration the braking torque is applied to the wheel (14) by the friction brake (30).

2. Method according to Claim 1,
**characterized in that**
variation of a first braking torque portion which is applied to the wheel (14) by the friction brake (30) at least during part of the duration of the anti-lock braking operation is brought about by means of the regulating device (40) while a second braking torque portion (60) which is applied to the wheel (14) by the recuperative brake (18) is kept constant.

3. Method according to one of Claims 1 or 2,
**characterized in that**
a first braking torque portion which is applied to the wheel (14) by the friction brake (30) is limited to at least a first predefinable threshold value by means of the regulating device (40) during the anti-lock braking operation.

4. Method according to one of the preceding claims,
**characterized in that**
a second braking torque portion (60) which is applied to the wheel (14) by the recuperative brake (18) is limited to at least a second predefinable threshold value by means of the regulating device (40) during the anti-lock braking operation.

5. Method according to Claims 3 and 4,
**characterized in that**
the first threshold value is greater than the second threshold value.

6. Method according to Claims 3 and 4 or according to Claim 5,
**characterized in that**
during the anti-lock braking operation the second threshold value is predefined as a function of the first threshold value.

## Revendications

1. Procédé de freinage d'un véhicule (10) se déplaçant le long d'une voie de circulation au moyen d'un dispositif de freinage (28), qui comprend au moins un frein à friction (30) et au moins un frein à récupération (18) pour le freinage d'au moins une roue (14) du véhicule (10), un freinage à antiblocage étant effectué au moyen du dispositif de freinage (28), dans lequel au moins un couple de freinage (64) devant être appliqué sur la roue par le dispositif de freinage (28) peut être limité au moins temporairement à une valeur prédéfinissable au moyen d'un dispositif de régulation (40) du véhicule (10), afin d'empêcher au moins temporairement de ce fait un blocage de la roue (14) par rapport à la voie de circulation,
le couple de freinage (64), pour le freinage de la roue (14), pouvant être appliqué au moins en partie par le frein à récupération (18) sur la roue (14) au moins pendant une durée partielle de la durée totale du freinage à antiblocage,
**caractérisé en ce que** l'application du couple de freinage (64) réalisée au moins temporairement par le frein à récupération (18) est effectuée pendant une première durée partielle de la durée totale du freinage à antiblocage et est supprimée pendant une deuxième durée partielle suivant la première durée partielle de la durée totale du freinage à antiblocage, tandis que le couple de freinage est appliqué par le frein à friction (30) sur la roue (14) pendant la deuxième durée partielle.

2. Procédé selon la revendication 1,
**caractérisé en ce que**
qu'une variation d'une première proportion du couple de freinage appliqué sur la roue (14) est effectuée par le frein à friction (30) au moyen du dispositif de régulation (40) au moins pendant la durée partielle du freinage à antiblocage, tandis qu'une deuxième proportion du couple de freinage (60) appliquée sur la roue (14) par le frein à récupération (18) est maintenue constante.

3. Procédé selon l'une quelconque des revendications 1 ou 2,
**caractérisé en ce que**
pendant le freinage à antiblocage, une première proportion du couple de freinage appliquée par le frein à friction (30) sur la roue (14) est limitée à au moins une première valeur seuil prédéfinissable au moyen du dispositif de régulation (40).

4. Procédé selon l'une quelconque des revendications précédentes,
**caractérisé en ce que**
pendant le freinage à antiblocage, une deuxième proportion du couple de freinage (60) appliquée par le frein à récupération (18) sur la roue (14) est limitée à au moins une deuxième valeur seuil prédéfinissable au moyen du dispositif de régulation (40).

5. Procédé selon les revendications 3 et 4,
**caractérisé en ce que**
la première valeur seuil est supérieure à la deuxième valeur seuil.

6. Procédé selon les revendications 3 et 4 ou selon la revendication 5,
**caractérisé en ce que**
lors du freinage à antiblocage, la deuxième valeur seuil est prédéfinie en fonction de la première valeur seuil.
